# EUROPÄISCHE PATENTANMELDUNG

(11) **EP 1 514 731 A2**
(43) Veröffentlichungstag der Anmeldung: **16.03.2005**
(21) Anmeldenummer: 04020672.4
(22) Anmeldetag: 31.08.2004
(51) Int. Cl.: B60Q 1/26

(54) **Fahrzeugleuchte**

(30) Priorität: 09.09.2003 DE 10341572
(71) Anmelder: FER Fahrzeugelektrik GmbH, 99819 Eisenach (DE)
(72) Erfinder: Moser, Helmut, 76646 Bruchsal (DE)
(74) Vertreter: Strasser, Wolfgang, Dipl.-Phys

(57) **Zusammenfassung**

Zur Erweiterung der gestalterischen und technischen Einsatzmöglichkeiten einer Fahrzeugleuchte, insbesondere für Kraftfahrzeuge, die wenigstens einer Funktionsleuchte und eine den Innenraum der Fahrzeugleuchte abdeckende Lichtaustrittsscheibe umfaßt, ist auf Oberflächenbereichen wenigstens eines Bauteils (1) der Fahrzeugleuchte, die von außen her sichtbar sind und die wenigstens eine Funktionsleuchte nicht verdecken, eine Elektrolumineszenz-Anordnung vorgesehen, die wenigstens einen Flachkondensator (20) umfaßt, der zumindest eine hintere Basiselektrode (25), eine im Betrieb leuchtende Pigmentschicht (27) und eine transparente Deckelektrode (26) umfaßt.

## Beschreibung

Die Erfindung betrifft eine Fahrzeugleuchte der im Oberbegriff von Anspruch 1 genannten Art.

In letzter Zeit werden derartige Fahrzeugleuchten, bei denen es sich sowohl um Leuchten für die Vorder- als auch die Rückseite von Fahrzeugen, insbesondere Kraftfahrzeugen handeln kann, in zunehmendem Maße mit völlig transparenten, optisch inaktiven Lichtdurchtrittsscheiben gestaltet, die insbesondere keine die Raumverteilung des hindurchtretenden Lichts verändernden Strukturen besitzen und somit einen völlig freien Blick in das "Innere" der Fahrzeugleuchte ermöglichen. Dabei sind dann nicht nur der oder die meist von Reflektoren gebildeten Licht-Abstrahlbereiche der in die betreffende Fahrzeugleuchte integrierten Funktionsleuchten sondern auch die Oberflächen von weiteren Bauteilen sichtbar, welche diese Licht-Abstrahlbereiche umgeben bzw. sich von außen her gesehen neben diesen befinden. Bei diesen Bauteilen kann es sich um die Lichtaustrittsscheibe selbst handeln, deren Rückseite natürlich ebenfalls von außen her "sichtbar" ist, oder auch um Gehäuseteile wie z. B. die Rückwand und/oder die Bodenfläche des Leuchten-Gehäuses oder beliebige andere Bauteile.

Nach dem Stand der Technik werden diese sichtbaren Oberflächen, soweit es sich nicht um die Rückseite der Lichtaustrittsscheibe handelt, im allgemeinen entweder verspiegelt oder in der Farbe der Kraftfahrzeug-Karosserie lackiert.

Demgegenüber liegt der Erfindung die Aufgabe zugrunde, eine Fahrzeugleuchte der eingangs genannten Art so weiter zu bilden, daß sie sowohl in gestalterischer als auch funktionaler Hinsicht zusätzliche, beim Stand der Technik nicht vorhandene Möglichkeiten bietet.

Zur Lösung dieser Aufgabe sieht die Erfindung die im Anspruch 1 niedergelegten Merkmale vor.

Die eigentliche Funktionsleuchte bzw. Funktionsleuchten, die in die betreffende Fahrzeugleuchte integriert ist bzw. sind werden somit durch eine zusätzliche Elektrolumineszenz-Anordnung ergänzt, die wenigstens einen Elektrolumineszenz-Flachkondensator umfaßt und so angeordnet ist, daß sie von außen her neben dem Licht-Abstrahlbereich bzw. den Licht-Abstrahlbereichen der Funktionsleuchte bzw. Funktionsleuchten sichtbar ist, diese beispielsweise umgibt. Der wenigstens eine Elektrolumineszenz-Flachkondensator kann von der bzw. den Funktionsleuchten unabhängig oder gemeinsam mit diesen ansteuerbar sein. Dabei ist seine Leuchtintensität im allgemeinen deutlich geringer als die der Funktionsleuchten.

Das Licht der Elektrolumineszenz-Leuchtanordnung dient mehreren Zwecken:
- es erweitert die Gestaltungsmöglichkeiten für die gesamte Fahrzeugleuchte und somit für das Design des Kraftfahrzeugs,.
- es verbessert die Erkennbarkeit der Dimensionen des Kraftfahrzeugs bei Nacht, da sich die Oberflächen, die mit der Elektrolumineszenz-Leuchtanordnung bedeckt sind, im allgemeinen weiter nach außen erstrecken können, als die eigentlichen Funktionsleuchten, und
- es erhöht die Sicherheit bei Ausfall einer Funktionsleuchte.

Im allgemeinen handelt es sich bei den oben erwähnten Licht-Abstrahlbereichen um die Licht-Austrittsöffnungen von Reflektoren, die parabolisch oder als Freiflächen-Reflektoren ausgebildet sein können und in welche die zugehörige Lichtquelle von hinten her eingesetzt ist.

Diese Reflektoren umfassen in bekannter Weise einen die Form ihrer Spiegelfläche vorgebenden, als Hohlkörper ausgebildeten Träger , der auf seiner inneren Oberfläche verspiegelt ist. Prinzipiell können der oder die Reflektoren der erfindungsgemäßen Fahrzeugleuchte aus Metall bestehen, doch ist es bevorzugt, daß sie aus Kunststoff hergestellt und auf ihrer Innenseite mit einer metallischen, spiegelnden Schicht, beispielsweise aus Aluminium bedampft sind. Die die Licht-Abstrahlbereiche dieser Reflektoren umgebenden Oberflächen können beispielsweise flächige Verbindungsstege umfassen, welche die Reflektoren einstückig miteinander verbinden und auf ihrer von außen her sichtbaren Oberfläche die erfindungsgemäße Elektrolumineszenz-Leuchtanordnung aufweisen. In diesem Fall kann dann das Bauteil der Leuchte, das die Elektrolumineszenz-Leuchtanordnung trägt, mit dem Reflektor-Träger oder den Reflektor-Trägern der Funktionsleuchte bzw. Funktionsleuchten einstückige ausgebildet werden.

In gleicher Weise ist es aber auch möglich, die Elektrolumineszenz-Leuchtanordnung auf der Rückseite der transparenten Lichtaustrittsscheibe so anzuordnen, daß sie nur einen Licht-Durchtrittsbereich oder mehrere Licht-Durchtrittsbereiche für das Licht der Funktionsleuchte bzw. Funktionsleuchten frei läßt.

Eine Fahrzeugleuchte kann auch dann gemäß der Erfindung mit einer Elektrolumineszenz-Leuchtanordnung ausgestattet werden, wenn ihre Licht-Durchtrittsscheibe optisch aktive Strukturen trägt.

Diese und weitere vorteilhafte Ausgestaltungen der erfindungsgemäßen Fahrzeugleuchte sowie bevorzugte Verfahren zu ihrer Herstellung sind in den Unteransprüchen niedergelegt.

Die Erfindung wird im folgenden anhand von Ausführungsbeispielen unter Bezugnahme auf die Zeichnung beschrieben ; in dieser zeigen:
- Figur 1: eine stark schematisierte Vorderansicht eines Bauteils für eine erfindungsgemäße Fahrzeugleuchte, das zwei einstückig miteinander verbundene Reflektoren für zwei in der betreffenden Fahrzeugleuchte zusammengefaßte Funktionsleuchten umfaßt,
- Figur 2: einen Schnitt durch das Bauteil aus Figur 1 längs der Linie II-II,
- Figur 2a: in vergrößertem Maßstab ein Detail aus Figur 2,
- Figur 3: eine stark schematisierte Vorderansicht einer Lichtaustrittsscheibe für eine erfindungsgemäße Fahrzeugleuchte, die für zwei in der betreffenden Fahrzeugleuchte zusammengefaßte Funktionsleuchten zwei Licht-Durchtrittsbereiche aufweist,
- Figur 4: einen Schnitt durch die Lichtaustrittsscheibe aus Figur 3 längs der Linie IV-IV und
- Figur 4a: in vergrößertem Maßstab ein Detail aus Figur 4.

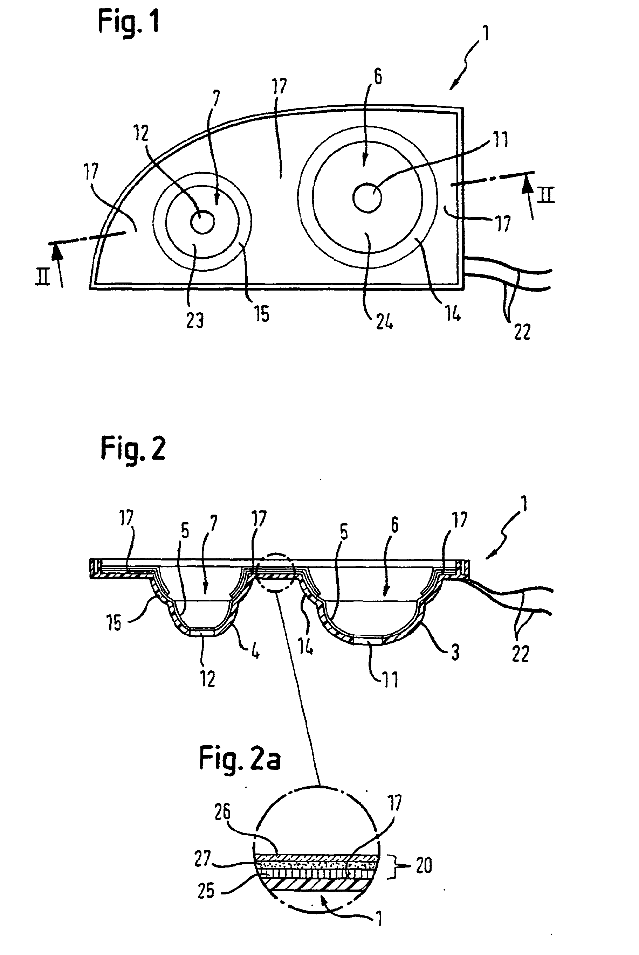

In den Figuren 1, 2 und 2a ist in schematischer Weise ein aus Kunststoff bestehendes Bauteil 1 einer Fahrzeugleuchte dargestellt, das die beiden Träger 3, 4 von zwei Reflektoren 6, 7 umfaßt, die zwei in die Fahrzeugleuchte integrierten Funktionsleuchten zugeordnet sind, bei denen es sich beispielsweise um einen Front-Scheinwerfer und einen daneben angeordneten Fahrtrichtungs-Anzeiger handeln kann.

Auf die Innenseite der beiden Träger 3, 4 ist jeweils eine Spiegelschicht 5, beispielsweise aus Aluminium aufgedampft, so daß das nach hinten und zur Seite abgestrahlte Licht von zwei von hinten her durch die Öffnungen 11, 12 eingesetzten Lichtquellen (nicht dargestellt) durch die Reflektoren 6, 7 mit einer gewünschten Lichtverteilung nach vorne umgelenkt und abgestrahlt wird, die beispielsweise dadurch erreicht wird, daß die verspiegelten Oberflächen der Träger 3, 4 als entsprechende Freiflächen ausgebildet sind. Alternativ hierzu können die Reflektoren 6, 7 aber auch in herkömmlicher Weise Parabolform besitzen.

Wie man sieht, umfaßt das Bauteil 1 weiterhin sich nach vorne (d. h. in Figur 2 nach oben) erweiternde kalottenförmige Bereiche 14, 15, welche die Träger 3, 4 nach vorne fortsetzen und in Oberflächenbereiche 17 übergehen, welche die kalottenförmigen Bereiche 14, 15 umgeben und einstückig miteinander verbinden.

Sowohl die Oberflächenbereiche 17 als auch die nach vorne weisenden Oberflächen der kalottenförmigen Bereiche 14, 15 sind mit einer Elektrolumineszenz-Anordnung versehen, die bei diesem Ausführungsbeispiel von einem einzigen Flachkondensator 20 gebildet wird, der unabhängig von den beiden Funktionsleuchten über die Anschlußleitung 22 so mit einer Wechselspannung ansteuerbar ist, daß seine zwischen der Basiselektrode 25 und der transparenten Deckelektrode 26 befindliche Pigmentschicht 27 (siehe Figur 2a) leuchtet.

Alternativ zu der dargestellten Ausführungsform könnte der Flachkondensator 20 auch nur auf einem Teil der von außen her sichtbaren Flächenbereiche 14, 15 und 17 angeordnet sein. Wesentlich ist lediglich, daß er die Licht-Abstrahlbereiche 23, 24 der Funktionsleuchten nicht verdeckt. Auch können auf den von außen her sichtbaren Flächenbereichen 14, 15 und 17 mehrere Flachkondensatoren vorgesehen sein, die sich hinsichtlich ihrer Farbe voneinander unterscheiden und/oder voneinander unabhängig ansteuerbar sind.

Vorteilhafterweise wird die Basiselektrode 25 des oder der Flachkondensatoren von der gleichen elektrisch leitenden Schicht gebildet, die auf die Innenseite der Träger 3, 4 aufgebracht ist, um die Spiegelschicht 5 der Reflektoren 6, 7 zu bilden. In diesem Falle kann die gesamte nach vorne, d. h. in Figur 2 nach oben weisende Seite des Bauteils 1 bei dessen Herstellung mit einer durchgehenden, elektrisch leitfähigen, spiegelnden Schicht 5, 25 bedampft werden.

Der Flachkondensator 20 kann zwischen der Pigmentschicht 27 und der Basiselektrode 25 eine (nicht dargestellte) Isolationsschicht umfassen, um seine Durchschlagsfestigkeit zu verbessern.

Die Oberflächenbereiche 17 des Bauteils 1 sind in den Figuren 1 und 2 als im wesentlichen ebene Flächen dargestellt. Tatsächlich können Sie aber jede beliebige, dreidimensionale Raumform besitzen. Auch müssen sie die Licht-Abstrahlbereiche 23, 24 der Funktionsleuchten nicht oder nicht vollständig umgeben. Beispielsweise kann das Bauteil 1 einen sich im eingebauten Zustand der Fahrzeugleuchte unterhalb der Funktionsleuchten im wesentlichen senkrecht zur Zeichenebene der Figur 1 auf den Betrachter zu erstreckenden Teil umfassen beziehungsweise aus einem solchen Teil bestehen, der dann nicht die "Rückwand" sondern den "Boden" des von außen her sichtbaren Teils des Fahrzeugleuchten-Gehäuses bildet. Auch eine kombinierte Funktion des Bauteils 1 sowohl als "Rückwand" als auch als "Boden" ist möglich, wobei alle seine von außen her sichtbaren, die Funktionsleuchten nicht verdeckenden Oberflächen oder aber auch nur einen Teil hiervon eine Elektrolumineszenz-Leuchtanordnung tragen können.

Diese Elektrolumineszenz-Leuchtanordnung kann, wie oben bereits für die Basiselektrode beschrieben, schichtenweise aufgedampft oder durch ein anderes Sprüh- oder sonstiges Beschichtungsverfahren aufgebracht sein. Alternativ hierzu ist es möglich, die Elektrolumineszenz-Leuchtanordnung vom Bauteil 1 zunächst getrennt als ebenes "endloses" Folienmaterial herzustellen, daß auf einer tiefziehbaren metallischen Trägerfolie, die gleichzeitig als Basiselektrode dienen kann, die übrigen zur Bildung eines Elektrolumineszenz-Flachkondensators erforderlichen, oben geschilderten Schichten beträgt. Aus diesem Folienmaterial kann dann einen in seiner Form an die abzudeckende Oberfläche des Bauteils 1 angepaßtes Mehrschichten-Folienelement ausgeschnitten beziehungsweise ausgestanzt und durch einen Tiefzieh-Prägevorgang an die dreidimensionale Raumform der abzudeckenden Oberfläche des Bauteils 1 so angepaßt werden, daß es vor diese gesetzt und mit dieser beispielsweise durch Kleben oder Aufclipsen verbunden werden kann. Besonders bevorzugt ist es jedoch, dieses Mehrschichten-Folienelement dann, wenn das Bauteil 1 durch Spritzguß hergestellt wird, in die betreffende Spritzguß-Form einzusetzen und dann mit dem das Bauteil 1 bildenden Material zu hinterspritzen, um es so mit diesem fest zu verbinden.

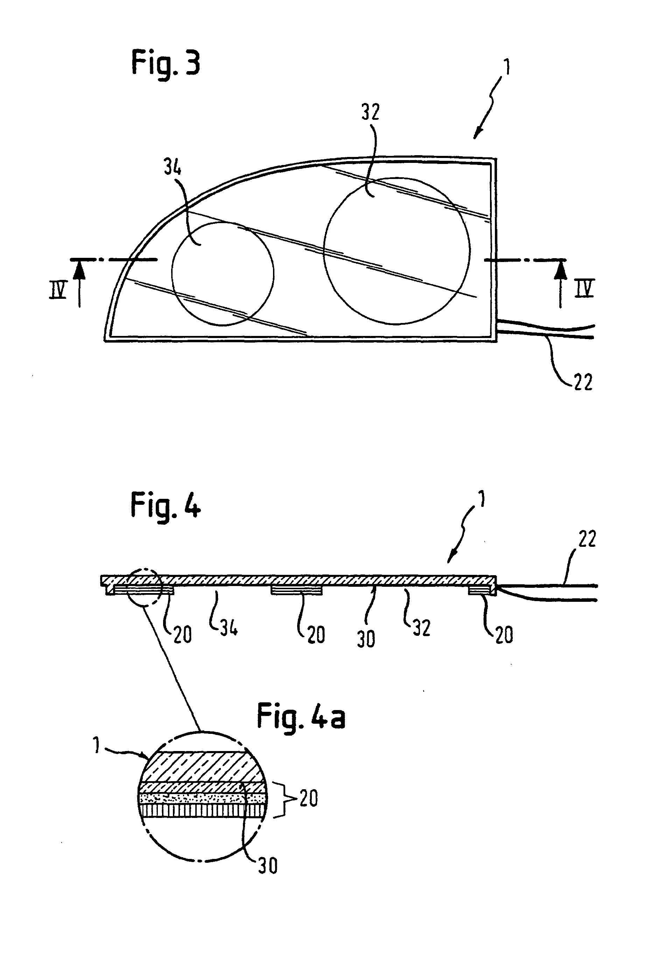

Bei dem in den Figuren 3, 4 und 4a wiedergegebenen Ausführungsbeispiel sind Teile, die in entsprechender Weise auch in den Figuren 1, 2 und 2a vorhanden sind, mit den gleichen Bezugszeichen bezeichnet.

Der wesentliche Unterschied zu dem zuvor beschriebenen Ausführungsbeispiel besteht darin, daß nunmehr das Bauteil 1, welches auf einer seiner Oberflächen die Elektrolumineszenz-Anordnung mit dem wenigstens einen Flachkondensator 20 trägt, die Lichtaustrittsscheibe der erfindungsgemäßen Fahrzeugleuchte ist. Da diese Lichtaustrittsscheibe aus einem transparenten Material besteht, ist, wie man insbesondere der Figur 4a entnimmt, der Flachkondensator 20 in umgekehrter Reihenfolge auf ihre Rückseite 30 aufgebracht, sodaß sich unmittelbar an diese Rückseite 30 die transparenten Deckelektrode 26, an diese die Pigmentschicht 27 und an diese, gewünschtenfalls unter Zwischenschaltung einer (nicht dargestellten) Isolationsschicht, die Basiselektrode 25 anschließt, die je nach Wunsch transparent oder lichtundurchlässig ausgebildet sein kann.

Alle oben gemachten Aussagen hinsichtlich der Art der Aufbringung der Elektrolumineszenz-Anordnung auf das Bauteil 1 und ihrer Ausgestaltung gelten hier in entsprechender Weise. Insbesondere kann die Elektrolumineszenz-Leuchtanordnung wieder als Mehrschichten-Folienelement ausgebildet und bei der Herstellung der Lichtaustrittsscheibe durch Spritzguß in die betreffende Form eingelegt und dann mit dem Material der Lichtaustrittsscheibe hinterspritzt werden.

Im Regelfall wird die Lichtaustrittsscheibe anders als in den Figuren dargestellt, nicht eben sein sondern eine mehrdimensional gekrümmte Raumform besitzen.

Es versteht sich, das die Elektrolumineszenz-Anordnung so geformt wird, daß sie zumindest die Licht-Durchtrittsbereiche 32, 34 für die beiden Funktionsleuchten frei läßt.

## Patentansprüche

1. Fahrzeugleuchte, insbesondere für Kraftfahrzeuge, mit wenigstens einer Funktionsleuchte und einer den Innenraum der Fahrzeugleuchte abdeckenden Lichtaustrittsscheibe, **dadurch gekennzeichnet, daß** auf Oberflächenbereichen wenigstens eines Bauteils (1) der Fahrzeugleuchte, die von außen her sichtbar sind und die wenigstens eine Funktionsleuchte nicht verdecken, eine Elektrolumineszenz-Anordnung vorgesehen ist, die wenigstens einen Flachkondensator (20) umfaßt, der zumindest eine hintere Basiselektrode (25), eine im Betrieb leuchtende Pigmentschicht (27) und eine transparente Deckelektrode (26) umfaßt.

2. Fahrzeugleuchte nach Anspruch 1, **dadurch gekennzeichnet, daß** die wenigstens eine Funktionsleuchte eine Lichtquelle und einen diese von hinten her umgebenden Reflektor (6, 7) umfaßt.

3. Fahrzeugleuchte nach Anspruch 1 oder 2, **dadurch gekennzeichnet, daß** das die Elektrolumineszenz-Anordnung tragende Bauteil (1) aus Kunststoff besteht.

4. Fahrzeugleuchte nach einem der vorhergehenden Ansprüche, **dadurch gekennzeichnet, daß** der wenigstens eine Flachkondensator (20) als direkte Beschichtung auf das die Elektrolumineszenz-Anordnung tragende Bauteil (1) aufgebracht ist.

5. Fahrzeugleuchte nach einem der Ansprüche 1 bis 3, **dadurch gekennzeichnet, daß** der wenigstens eine Flachkondensator (20) von einem Mehrschichten-Folienelement gebildet wird, das mit dem die Elektrolumineszenz-Anordnung tragenden Bauteil (1) verbunden ist.

6. Fahrzeugleuchte nach einem der Ansprüche 3 bis 5, **dadurch gekennzeichnet, daß** der wenigstens eine Reflektor (6, 7) einen aus Kunststoff bestehenden Träger (3, 4) umfaßt, auf dessen Vorderseite eine reflektierende Schicht (5) aufgebracht ist, und daß das die Elektrolumineszenz-Anordnung tragende Bauteil (1) mit dem Träger (3, 4) für die reflektierende Schicht (5) des wenigstens einen Reflektors (6, 7) einstückig verbunden ist und den wenigstens einen Flachkondensator (20) auf seiner der Lichtaustrittsscheibe zugewandten Seite trägt.

7. Fahrzeugleuchte nach einem der Ansprüche 3 bis 5, **dadurch gekennzeichnet, daß** das die Elektrolumineszenz-Anordnung tragende Bauteil (1) die Lichtaustrittsscheibe ist, die den wenigstens einen Flachkondensator (20) auf ihrer Rückseite (30) trägt.

8. Verfahren zur Herstellung einer Fahrzeugleuchte nach Anspruch 6, **dadurch gekennzeichnet, daß** die Basiselektrode (25) des wenigstens einen Flachkondensators (20) auf die Vorderseite des den wenigstens einen Reflektor (6, 7) umgebenden Bauteils (1) gleichzeitig mit dem Aufdampfen der metallischen Spiegelschicht (5) auf den mit dem Bauteil (1) einstückig verbundenen Träger (3, 4) aufgedampft wird.

9. Verfahren zur Herstellung einer Fahrzeugleuchte nach Anspruch 5, **dadurch gekennzeichnet, daß** das Mehrschichten-Folienelement aus einer ebenen, tiefziehbaren Mehrschichten-Folie ausgeschnitten und durch einen Prägevorgang an die Raumform des Bauteils (1) angepaßt und dann an diesem montiert wird.

10. Verfahren zur Herstellung einer Fahrzeugleuchte 9, **dadurch gekennzeichnet, daß** das Mehrschichten-Folienelement auf eine Oberfläche des Bauteils (1) aufgeklebt wird.

11. Verfahren zur Herstellung einer Fahrzeugleuchte nach Anspruch 9, **dadurch gekennzeichnet, daß** das Mehrschichten-Folienelement auf das Bauteil (1) aufgeklipst wird.

12. Verfahren zur Herstellung einer Fahrzeugleuchte nach Anspruch 9, **dadurch gekennzeichnet, daß** das Mehrschichten-Folienelement durch Einlegen in die zur Herstellung des Bauteils (1) dienende Form und Hinterspritzen mit dem das Bauteil (1) bildenden Kunststoffmaterial mit dem Bauteil (1) fest verbunden wird.
